# EUROPEAN PATENT SPECIFICATION

(11) **EP 3 985 554 B1**
(45) Date of publication and mention of the grant of the patent: **06.12.2023**
(21) Application number: 20900756.6
(22) Date of filing: 16.10.2020
(51) Int. Cl.: G06V 10/80, G06F 18/25, G06V 20/58

(54) **TRAFFIC LIGHT RECOGNITION METHOD AND APPARATUS**
VERKEHRSAMPELERKENNUNGSVERFAHREN UND -VORRICHTUNG
PROCÉDÉ ET APPAREIL DE RECONNAISSANCE DE FEU DE CIRCULATION

(30) Priority: 12.08.2020 CN 202010809487
(43) Date of publication of application: 20.04.2022
(73) Proprietor: Guangdong Xiaopeng Motors Technology Co., Ltd., Sino-Singapore Knowledge City, Huangpu District Guangzhou, Guangdong 510555 (CN)
(72) Inventor: LI, Weiwei, Guangdong 510555 (CN); ZHANG, Pengyue, Guangdong 510555 (CN); LIU, Langechuan, Guangdong 510555 (CN)
(74) Representative: Ran, Handong
(86) International application number: PCT/CN2020/121562
(87) International publication number: WO 2022/032861

(56) References cited:
- CN-A- 109 271 892
- CN-A- 109 492 507
- CN-A- 111 491 093
- US-A1- 2019 080 186
- US-B1- 10 339 400
- US-B1- 10 339 400
- US-B1- 10 467 487

## Description

### TECHNICAL FIELD

The present disclosure relates to the field of image technologies, and more particularly, to a method and apparatus for recognizing a traffic light.

### BACKGROUND

In a visual sensing recognition system for traffic lights, recognition of the traffic lights is usually performed based on pictures taken by a monocular forward camera.

When a relationship between a focal length and an angle of view of a camera cannot achieve a suitable photographing condition, it is easy to cause traffic accidents. For example, when a traffic light exceeds the angle of view of the camera, the visual sensing recognition system may mistakenly believe that there is no traffic light currently; or when the traffic light is small in the angle of view of the camera, the visual sensing recognition system will not be able to clearly recognize the traffic light. US10339400B1 provides a method for imaging a traffic light. The method may include selecting, by the on-vehicle processing system, a camera mode based on the determined distance to the traffic light. US2019/080186A1 provides a traffic state recognizing method and apparatus, a computer device and readable medium, which are used to improve the autonomous vehicle's efficiency in recognizing the state of traffic lights.

### SUMMARY

In view of the above problems, the present disclosure provides a method and apparatus for recognizing a traffic light, capable of overcoming the above problems or at least partially solving the above problems The invention is as set out in the independent claims.

A computer-implemented method for recognizing a traffic light is provided. The method involves a plurality of cameras. Fields of view of any two cameras of the plurality of cameras have a coverage relationship in which a field of view of one camera is covered by a field of view of the other camera. The method includes: obtaining image data collected by the plurality of cameras; determining a target camera based on the image data collected by the plurality of cameras; and recognizing the traffic light by using the target camera.

Said determining the target camera based on the image data collected by the plurality of cameras includes: determining a position of the traffic light in first image data collected by a first camera; obtaining a relative positional relationship of fields of view between the first camera and a second camera based on a picture matching method, and determining, based on the relative positional relationship of fields of view, whether the position of the traffic light matches the second camera, wherein a field of view of the first camera covers a field of view of the second camera; and determining, in response to determining that the position of the traffic light matches the second camera, the second camera as the target camera.

Said determining, based on the relative positional relationship of fields of view, whether the position of the traffic light matches the second camera includes: determining, based on the relative positional relationship of fields of view, an image region corresponding to the field of view of the second camera in the first image data as a preferential image region for the second camera; detecting whether the preferential image region includes the position of the traffic light; determining, in response to detecting that the preferential image region includes the position of the traffic light, that the position of the traffic light matches the second camera; and determining, in response to detecting that the preferential image region does not include the position of the traffic light, that the position of the traffic light does not match the second camera. In at least one embodiment, the method further includes determining, in response to determining that the position of the traffic light does not match the second camera, the first camera as the target camera.

In at least one embodiment, the method further includes, prior to said determining the position of the traffic light in the first image data collected by the first camera: determining whether the traffic light is detected in the first image data collected by the first camera; and performing, in response to determining that the traffic light is detected in the first image data collected by the first camera, said determining the position of the traffic light in the first image data collected by the first camera.

In at least one embodiment, the method further includes: determining, in response to determining that no traffic light is detected in the first image data collected by the first camera, whether the second camera is a camera with a smallest field of view; determining, in response to determining that the second camera is not the camera with the smallest field of view, the second camera as the first camera, and returning to perform said determining whether the traffic light is detected in the first image data collected by the first camera; and outputting, in response to determining that the second camera is the camera with the smallest field of view, prompt information indicating that no traffic light is detected.

In at least one embodiment, the plurality of cameras is sorted based on sizes of fields of view, and the first camera and the second camera are cameras sorted to be adjacent to each other.

A data processing apparatus for recognizing a traffic light is provided. The apparatus involves a plurality of cameras. Fields of view of any two cameras of the plurality of cameras have a coverage relationship in which a field of view of one camera is covered by a field of view of the other camera. The apparatus includes: an image data obtaining module configured to obtain image data collected by the plurality of cameras; a target camera determination module configured to determine a target camera based on the image data collected by the plurality of cameras; and a traffic light recognition module configured to recognize the traffic light by using the target camera. The target camera determination module includes: a traffic light position determination sub-module configured to determine a position of the traffic light in first image data collected by a first camera; a determination sub-module configured to obtain a relative positional relationship of fields of view between the first camera and a second camera based on a picture matching method, and determine, based on the relative positional relationship of fields of view, whether the position of the traffic light matches the second camera, wherein a field of view of the first camera covers a field of view of the second camera; and a target camera determination sub-module configured to determine, in response to determining that the position of the traffic light matches the second camera, the second camera as the target camera. The determination sub-module includes: a preferential image region determination unit configured to determine, based on the relative positional relationship of fields of view, an image region corresponding to the field of view of the second camera in the first image data as a preferential image region for the second camera; a detection unit configured to detect whether the preferential image region comprises the position of the traffic light; a first determination unit configured to determine, in response to detecting that the preferential image region comprises the position of the traffic light, that the position of the traffic light matches the second camera; and a second determination unit configured to determine, in response to detecting that the preferential image region does not comprise the position of the traffic light, that the position of the traffic light does not match the second camera. The apparatus further includes: a determination module configured to determine, in response to determining that the position of the traffic light does not match the second camera, the first camera as the target camera. The apparatus further includes: a first determination module configured to determine whether the traffic light is detected in the first image data collected by the first camera; and a second determination module configured to invoke the traffic light position determination sub-module, in response to determining that the traffic light is detected in the first image data collected by the first camera. The apparatus further includes: a second camera determination module configured to determine, in response to determining that no traffic light is detected in the first image data collected by the first camera, whether the second camera is a camera with a smallest field of view; a second camera determining module configured to determine, in response to determining that the second camera is not the camera with the smallest field of view, the second camera as the first camera, and return to invoke the first determination module; and a prompt information output module configured to output, in response to determining that the second camera is the camera with the smallest field of view, prompt information indicating that no traffic light is detected. The plurality of cameras is sorted based on sizes of fields of view, and the first camera and the second camera are cameras sorted to be adjacent to each other.

The apparatus for recognizing a traffic light as mentioned above includes a processor, a memory, and a computer program stored on the memory and executable on the processor. The computer program is configured to, when executed by the processor, cause the performance of the apparatus for recognizing the traffic light.

A computer-readable storage medium is provided. The computer-readable storage medium stores a computer program. The computer program, when executed by a processor, performs the method for recognizing the traffic light as described above.

An embodiment of the present disclosure has the following advantages.

In an embodiment of the present disclosure, a plurality of cameras is involved. Fields of view of any two cameras of the plurality of cameras have a coverage relationship. Image data collected by the plurality of cameras is obtained. A target camera is determined based on the image data collected by the plurality of cameras. The traffic light is recognized by using the target camera. Visual sensing and recognition of multi-camera merging for traffic lights is realized. The image data is collected through the plurality of cameras to filter out the most suitable camera for recognizing the traffic light, thereby avoiding an omission of a traffic light caused by a limited angle of view, improving accuracy and reliability of recognizing the traffic light, and effectively reducing the occurrence of traffic accidents.

### BRIEF DESCRIPTION OF DRAWINGS

In order to clearly explain technical solutions of the present disclosure, drawings used in the description of the present disclosure are briefly described below. Obviously, the drawings as described below are merely some embodiments of the present disclosure. Based on these drawings, other drawings can be obtained by those skilled in the art without creative effort.
FIG. 1 is a flowchart illustrating steps of a method for recognizing a traffic light according to an embodiment of the present disclosure;
FIG. 2 is a flowchart illustrating steps of another method for recognizing a traffic light according to an embodiment of the present disclosure;
FIG. 3 is a schematic diagram showing an example of recognizing a traffic light according to an embodiment of the present disclosure;
FIG. 4 is a flowchart illustrating steps of yet another method for recognizing a traffic light according to an embodiment of the present disclosure;
FIG. 5a is a schematic diagram showing a relationship of fields of view of a plurality of cameras according to an embodiment of the present disclosure;
FIG. 5b is a schematic diagram showing an example of preferential regions according to an embodiment of the present disclosure;
FIG. 5c is a flowchart illustrating an example of determining a preferential region according to an embodiment of the present disclosure;
FIG. 5d is a flowchart illustrating another example of determining a preferential region according to an embodiment of the present disclosure; and
FIG. 6 is a block diagram showing a structure of an apparatus for recognizing a traffic light according to an embodiment of the present disclosure.

### DESCRIPTION OF EMBODIMENTS

In order to make the above objects, features and advantages of the present disclosure more obvious and understandable, the present disclosure will be further described in detail below in conjunction with the accompanying drawings and specific embodiments. Obviously, embodiments described here are only part of embodiments of the present disclosure and are not all embodiments of the present disclosure. Based on the embodiments of the present disclosure, other embodiments obtained by those skilled in the art without creative labor are within scope of the present disclosure.

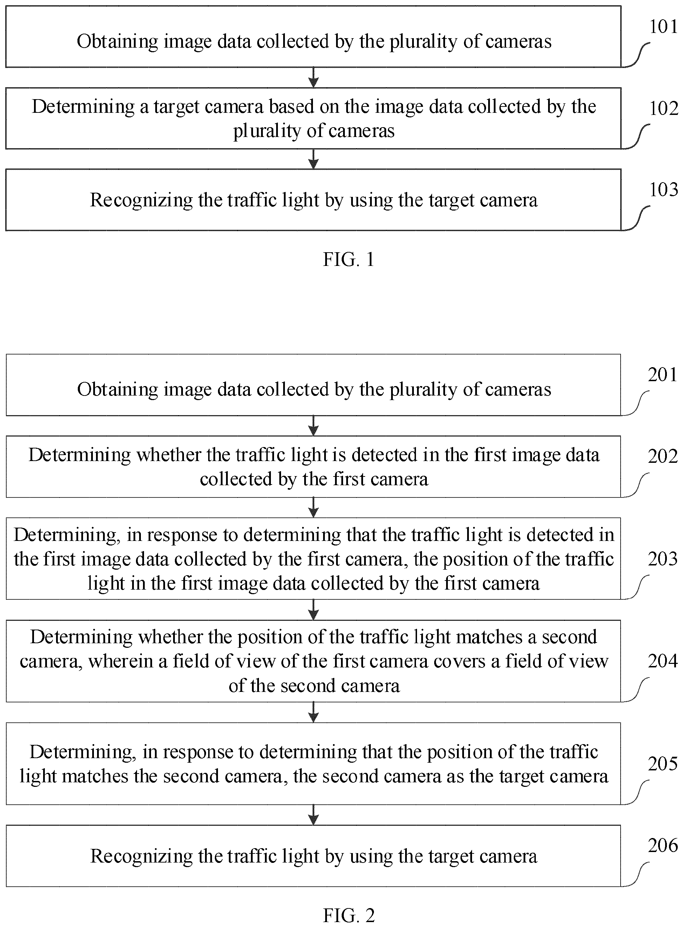

FIG. 1 is a flowchart illustrating steps of a method for recognizing a traffic light according to an embodiment of the present disclosure. Referring to FIG. 1, the method involves a plurality of cameras, and fields of view of any two cameras of the plurality of cameras have a coverage relationship. Specifically, the method may include the following steps.

At step 101, image data collected by the plurality of cameras is obtained.

As an example, the image data may be scene image data for a current driving situation of a vehicle. The scene image data may be collected by a vehicle-mounted camera for a user to recognize a traffic light. For example, pictures may be taken separately by a plurality of preset vehicle-mounted cameras.

In a process of recognizing the traffic light, the vehicle can be provided with a plurality of vehicle-mounted cameras. The plurality of vehicle-mounted cameras can take pictures respectively. The image data collected by the plurality of cameras in the current driving situation can be obtained to further recognize the traffic light.

In an example, a multi-lens camera with different focal lengths and different angles of view can be used. Fields of view of any two cameras of the multi-lens camera have a coverage relationship. With a visual sensing recognition system for traffic lights, recognizing of the traffic light can be performed based on a visual sensing recognition method for merging of the multi-lens camera with different focal lengths.

In another example, cameras with different angles of view in the multi-lens camera can cover different situations, such as when a traffic light is far away or nearby. A trinocular camera can be provided in an autonomous driving system. Fields of view of any two cameras of the trinocular camera have the coverage relationship. A field of view of camera 1 is completely covered by a field of view of camera 2, and the field of view of camera 2 is completely covered by a field of view of camera 3. The same method can be used to configure a binocular camera and a quadruple camera, and the present disclosure is not limited to this.

At step 102, a target camera is determined based on the image data collected by the plurality of cameras.

The target camera can be the most suitable camera screened for recognizing the traffic light. For example, the visual sensing recognition system for traffic lights can switch to the multi-lens camera to select the most suitable camera as the target camera.

After the image data collected by the plurality of cameras is obtained, the most suitable camera for recognizing the traffic light can be selected, based on the image data collected by the plurality of cameras, from the plurality of cameras as the target camera.

For example, for the current driving situation, the visual sensing recognition system for traffic lights can seamlessly switch to pictures taken by the multi-lens camera, and then the most suitable camera can be selected based on pictures of the current driving scene collected by the plurality of cameras for recognizing the traffic light by using the selected camera.

At step 103, the traffic light is recognized by using the target camera.

After the target camera is determined, the target camera can be determined as a current camera for recognizing the traffic light, and then the target camera can be used for recognizing the traffic light.

When the visual sensing recognition system for traffic lights performs recognition based on pictures taken by a monocular camera, the monocular camera with a long focal length sees far way, but an increase in the focal length will cause the angle of view to be narrowed. When a traffic light exceeds the angle of view of the camera, the visual sensing recognition system may mistakenly believe that a picture of the traffic light has not been captured, which will cause traffic accidents. When a camera with a short focal length and a wide angle of view is used, the camera cannot see far away, such that the traffic light is small in the angle of view of the camera, and the visual sensing recognition system cannot clearly recognize the traffic light in the picture, which will also cause traffic accidents easily.

In an example, the visual sensing recognition method for traffic lights using multi-lens cameras is adopted. By merging cameras with different focal lengths and different angles of view, pictures can be taken under different situations such as when the traffic light is far away or nearby, thereby solving a problem of a missing or unclear traffic light caused by a limited angle of view of the monocular camera, and improving the reliability of recognizing the traffic light.

In an embodiment of the present disclosure, the plurality of cameras is involved. Fields of view of any two cameras of the plurality of cameras have the coverage relationship. The image data collected by the plurality of cameras is obtained. The target camera is determined based on the image data collected by the plurality of cameras. The traffic light is recognized by using the target camera. Visual sensing and recognition of multi-camera merging for traffic lights is realized. The image data is collected through the plurality of cameras to filter out the most suitable camera for recognizing the traffic light, thereby avoiding an omission of a traffic light caused by the limited angle of view, improving accuracy and reliability of recognizing the traffic light, and effectively reducing the occurrence of traffic accidents.

FIG. 2 is a flowchart illustrating steps of another method for recognizing a traffic light according to an embodiment of the present disclosure. Referring to FIG. 2, the method involves a plurality of cameras, and fields of view of any two cameras of the plurality of cameras have the coverage relationship. Specifically, the method includes the following steps.

At step 201, image data collected by the plurality of cameras is obtained.

In a process of recognizing the traffic light, the vehicle can be provided with the plurality of vehicle-mounted cameras. The plurality of vehicle-mounted cameras can take pictures respectively. The image data collected by the plurality of cameras in the current driving situation can be obtained to further recognize the traffic light.

In an example, the plurality of cameras can be sorted based on sizes of fields of view. Each of the plurality of cameras can be a trinocular camera. The trinocular camera can include a fisheye camera, a main camera, and a narrow camera. Sorted by the sizes of fields of view, a field of view of the fisheye camera covers a field of view of the main camera, and the field of view of the main camera covers a field of view of the narrow camera. In a process of recognizing the traffic light, it is possible to obtain image data collected by the camera with three different angles of view, i.e., the fisheye camera, the main camera, and the narrow camera.

At step 202, it is determined whether a traffic light is detected in first image data collected by a first camera.

The first camera may be a camera with a larger field of view in two cameras under a current determining condition. The current determining condition may be two adjacent cameras sorted based on a coverage relationship of fields of view.

As an example, the first image data may be image data collected by the first camera, e.g., a picture taken by the fisheye camera for the current driving scene.

After the image data collected by the plurality of cameras is obtained, the first camera can be determined from the plurality of cameras. The first image data collected by the first camera can be detected to determine whether the traffic light is detected.

For example, each of the plurality of cameras can be the trinocular camera. The trinocular camera can include the fisheye camera, the main camera, and the narrow camera. After the image data collected by the trinocular camera is obtained, the fisheye camera with the largest field of view can be determined as the first camera, and further, it can be determined whether the traffic light is detected in the picture taken by the fisheye camera.

In an example, traffic light detection can be performed on the pictures taken by the trinocular camera through a traffic light detection network to determine whether the traffic light is detected in the pictures taken by the trinocular camera.

At step 203, in response to determining that the traffic light is detected in the first image data collected by the first camera, a position of the traffic light is determined in the first image data collected by the first camera.

In response to determining that the traffic light is detected in the first image data collected by the first camera, a position of a region in the first image data where the traffic light is located can be determined as the position of the traffic light in the first image data. For example, when the traffic light is detected in the picture taken by the camera, a geometric region position of a region in the picture where the traffic light is presented is further determined.

At step 204, it is determined whether the position of the traffic light matches a second camera. A field of view of the first camera covers a field of view of the second camera.

As an example, the first camera and the second camera may be adjacent cameras in a sorted order. For example, the first camera and the second camera may be two cameras having a relationship of adjacent fields of view in an order sorted based on the sizes of fields of view.

After the position of the traffic light is determined, it is determined, based on a picture matching method, whether the position of the traffic light in the first image data collected by the first camera matches the second camera through a predetermined geometric position relationship between cameras. The field of view of the first camera covers the field of view of the second camera.

For example, when the first camera is the fisheye camera and the second camera is the main camera, a position of a scene of the main camera with a smaller angle of view in a scene of the fisheye camera with a larger angle of view can be determined based on the picture matching method. According to the geometric position relationship determined between the cameras, it can be detected whether the traffic light is in the scene of the main camera to determine whether the position of the traffic light matches the second camera.

At step 205, in response to determining that the position of the traffic light matches the second camera, the second camera is determined as the target camera.

In response to determining that the position of the traffic light matches the second camera, the second camera may be determined as the most suitable camera selected from the plurality of cameras for recognizing the traffic light, and used as the target camera.

At step 206, the target camera is used to recognize the traffic light.

After the target camera is determined, the target camera can be determined as a current camera for recognizing the traffic light. The target camera can be used for recognizing the traffic light.

In an embodiment of the present disclosure, the following steps are also included.

In response to determining that the position of the traffic light does not match the second camera, the first camera is determined as the target camera.

In response to determining that the position of the traffic light does not match the second camera, the first camera may be determined as the most suitable camera selected from the plurality of cameras for recognizing the traffic light, and determined as the target camera.

In an embodiment of the present disclosure, the following steps may also be included.

It is determined, in response to determining that no traffic light is detected in the first image data collected by the first camera, whether the second camera is a camera with a smallest field of view. In response to determining that the second camera is not the camera with the smallest field of view, the second camera is determined as the first camera, and it is returned to perform determining whether the traffic light is detected in the first image data collected by the first camera. In response to determining that the second camera is the camera with the smallest field of view, prompt information indicating that no traffic light is detected is outputted.

In response to determining that no traffic light is detected in the first image data collected by the first camera, determination can be performed on the second camera to determine whether the second camera is a camera with the smallest field of view in a current multi-lens camera. When it is determined that the second camera is not the camera with the smallest field of view, the second camera can be determined as the first camera, and it is returned to the step of performing determining whether the traffic light is detected in the first image data collected by the first camera, so as to further select the most suitable target camera for recognizing the traffic light out of plurality of cameras.

In an example, when it is determined that the second camera is the camera with the smallest field of view in the current multi-lens camera, the prompt information indicating that no traffic light is detected can be output to indicate that with a visual sensing method for traffic lights using merging of the multi-lens camera, no traffic light is detected in the current driving scene.

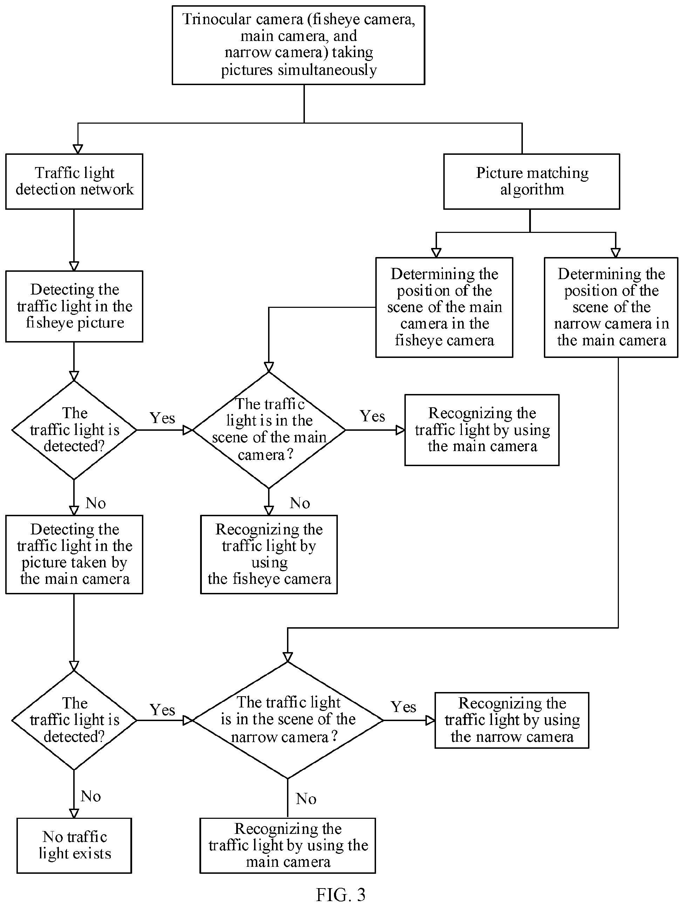

In order to enable those skilled in the art to better understand the above steps, an embodiment of the present disclosure will be exemplified below in combination with FIG. 3, but it should be understood that the embodiments of the present disclosure are not limited thereto.

In a process of recognizing the traffic light, the trinocular camera can be used to take pictures simultaneously. The trinocular camera can include the fisheye camera, the main camera, and the narrow camera. After the pictures taken by the trinocular camera are obtained, since the fisheye camera is the camera with the largest field of view sorted based on the sizes of the fields of view, it can be determined whether the traffic light is detected in the picture captured by the fisheye camera by using the traffic light detection network.

When it is determined that the traffic light is detected in the picture collected by the fisheye camera, since the fisheye camera and the main camera are cameras sorted to be adjacent to each other based on the fields of view, it can be determined whether the traffic light exists in the scene of the main camera. If the traffic light exists in the scene of the main camera, the main camera can be used for recognizing the traffic light. If the traffic light does not exist in the scene of the main camera, the fisheye camera can be used for recognizing the traffic light.

For determining whether the traffic light exists in the scene of the main camera, a picture matching algorithm can be used to determine the position of the scene of the main camera in the fisheye camera, and then on a basis of the predetermined geometric position relationship between the main camera and the fisheye camera, it is determined whether the traffic light exists in the scene of the main camera.

When it is determined that no traffic light is detected in the picture collected by the fisheye camera, since the main camera sorted to be adjacent to the fisheye camera based on the fields of view is not the camera with the smallest field of view in the currently used trinocular camera, it can be further determined whether the traffic light is detected in the picture collected by the main camera.

When it is determined that the traffic light is detected in the picture collected by the main camera, since the main camera and the narrow camera are adjacent cameras sorted to be adjacent to each other based on the fields of view, and the field of view of the main camera covers the field of view of the narrow camera, it can be determined whether the traffic light exists in a scene of the narrow camera. If the traffic light exists in the scene of the narrow camera, the narrow camera can be used for recognizing the traffic light. If the traffic light does not exist in the scene of the narrow camera, the main camera can be used for recognizing the traffic light.

For determining whether the traffic light exists in the scene of the narrow camera, determination may be made through determining the position of the scene of the narrow camera in the main camera by using the picture matching algorithm.

When it is determined that no traffic light is detected in the picture collected by the main camera, since the narrow camera sorted to be adjacent to the main camera based on the fields of view is the camera with the smallest field of view in the currently used trinocular camera, the prompt information indicating that no traffic light is detected can be outputted.

In an embodiment of the present disclosure, the plurality of cameras is involved. Fields of view of any two cameras of the plurality of cameras have the coverage relationship. The image data collected by the plurality of cameras is obtained. It is determined whether the traffic light is detected in the first image data collected by the first camera. In response to determining that the traffic light is detected in the first image data collected by the first camera, the position of the traffic light is determined in the first image data collected by the first camera. It is determined whether the position of the traffic light matches the second camera. The field of view of the first camera covers the field of view of the second camera. In response to determining that the position of the traffic light matches the second camera, the second camera is determined as the target camera. The target camera is used to recognize the traffic light. The visual sensing and recognition of multi-camera merging for traffic lights is realized. It is determined whether the traffic light is detected in the image data collected by the plurality of cameras to filter out the most suitable camera for recognizing the traffic light, thereby avoiding an omission of the traffic light caused by the limited angle of view, improving accuracy and reliability of recognizing the traffic light, and effectively reducing the occurrence of traffic accidents.

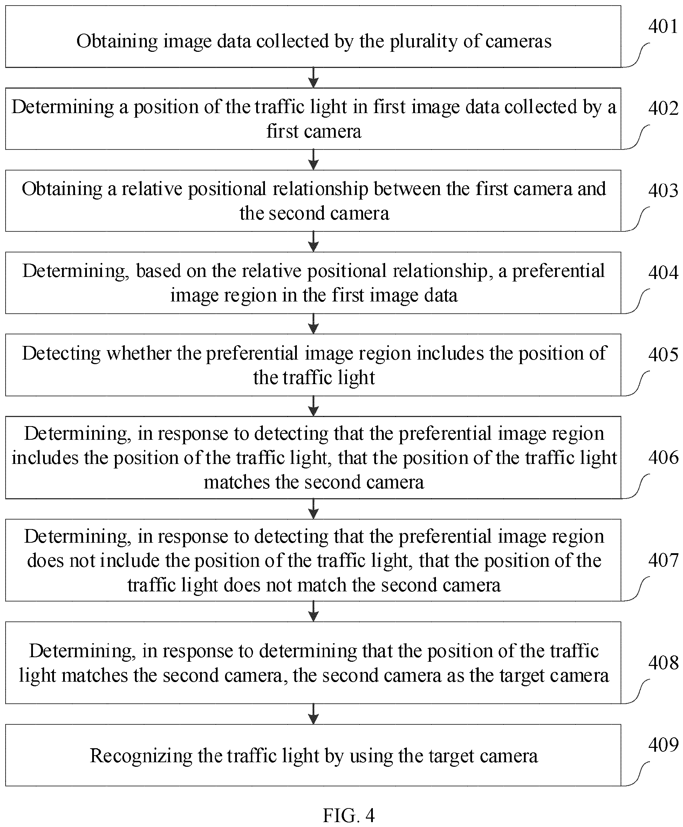

FIG. 4 is a flowchart illustrating steps of yet another method for recognizing a traffic light according to an embodiment of the present disclosure. Referring to FIG. 4, the method involves a plurality of cameras, and fields of view of any two cameras of the plurality of cameras have a coverage relationship. Specifically, the method includes the following steps.

At step 401, image data collected by the plurality of cameras is obtained.

In a process of recognizing the traffic light, the vehicle can be provided with the plurality of vehicle-mounted cameras. The plurality of vehicle-mounted cameras can take pictures respectively. The image data collected by the plurality of cameras in the current driving situation can be obtained to further recognize the traffic light.

At step 402, a position of the traffic light is determined in first image data collected by a first camera.

After the image data collected by the plurality of cameras is obtained, the first camera can be determined from the plurality of cameras. The first image data collected by the first camera can be detected, such that when it is determined that the traffic light is detected in the first image data collected by the first camera, the position of the region in the first image data where the traffic light is located is further determined as the position of the traffic light in the first image data. For example, when the traffic light is detected in the picture taken by the camera, the geometric region position of the region in the picture where the traffic light is presented is further determined.

At step 403, a relative positional relationship between the first camera and the second camera is obtained.

After the position of the traffic light is determined, the relative positional relationship between the first camera and the second camera is obtained based on the picture matching method, so as to further determine whether the position of the traffic light matches the second camera through the relative positional relationship.

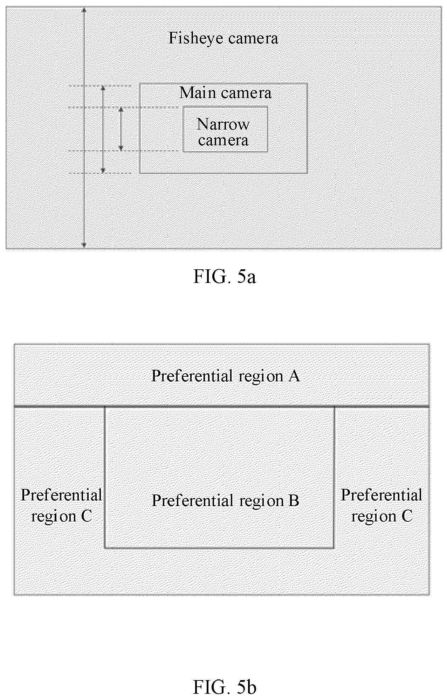

As illustrated in FIG. 5a, in the process of recognizing the traffic light by using the trinocular camera, the trinocular camera includes the fisheye camera, the main camera, and the narrow camera. Sorted by the sizes of fields of view, the field of view of the fisheye camera covers the field of view of the main camera, and the field of view of the main camera covers the field of view of the narrow camera.

Based on the picture matching method, a SIFT (Scale-Invariant Feature Transform) algorithm, an ORB (Oriented Fast and Rotated Brief) algorithm, and other feature point extraction and matching algorithms are used to obtain the relative positional relationship between the cameras in the trinocular camera. Since a relative position of a configured multi-lens camera is fixed for the same vehicle, the relative positional relationship of the fields of view of respective cameras may remain unchanged for a long time. The relative positional relationship of the fields of view between the cameras may be calculated and stored offline, such that in the process of recognizing the traffic light, the relative positional relationship between the cameras may be invoked directly without multiple calculations.

At step 404, a preferential image region is determined, based on the relative positional relationship, in the first image data.

After the relative positional relationship is obtained, the preferential image region for the second camera may be determined, based on the relative positional relationship, in the first image data to detect the preferential image region, thereby further determining whether the position of the traffic light matches the second camera.

As illustrated in FIG. 5b, by performing offline calculations for the relative positional relationship of the fields of view between the cameras, in the field of view of the first camera with a larger field of view, a geometric position of the second camera adjacent to the camera based on the field of view (and whose field of view is smaller than that of the camera) is determined as the preferential image region for the second camera (e.g., a preferential region B). Further, a remaining region in the field of view of the first camera can be determined as a region outside the field of view of the second camera (e.g., a preferential region A, and a preferential region C).

At step 405, it is detected whether the preferential image region includes the position of the traffic light.

After the preferential image region is determined, it can be detected whether the preferential image region includes the position of the traffic light, so as to determine whether the position of the traffic light matches the second camera.

For example, since the preferential image region can be the geometric position of the second camera in the field of view of the first camera, it can be detected whether the preferential image region includes the position of the traffic light in the first image data collected by the first camera after the preferential image region is determined.

At step 406, it is determined, in response to detecting that the preferential image region includes the position of the traffic light, that the position of the traffic light matches the second camera.

When it is detected that the preferential image region includes the position of the traffic light, it can be determined that the position of the traffic light matches the second camera. For example, when the preferential image region for the second camera includes the position of the traffic light in the first image data collected by the first camera, it can be determined that the traffic light is in the scene of the second camera.

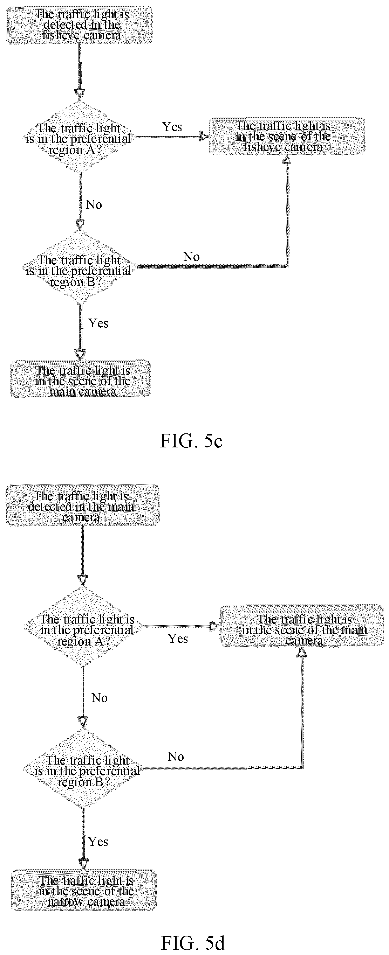

For example, as illustrated in FIG. 5c, when it is determined whether the traffic light exists in the scene of the main camera, after the traffic light is detected by the fisheye camera, it can be determined whether the traffic light exists in the preferential region A. The preferential region A can be a region in the field of view of the fisheye camera but outside the field of view of the main camera. When it is determined that the traffic light exists in the preferential region A, it can be determined that the traffic light exists in the scene of the fisheye camera. When it is determined that the traffic light does not exist in the preferential region A, it can be determined whether the traffic light exists in the preferential region B. The preferential region B can be a region for the main camera in the field of view of the fisheye camera. Further, when it is determined that the traffic light exists in the preferential region B, it can be determined that the traffic light exists in the scene of the main camera.

For another example, as illustrated in FIG. 5d, when it is determined whether the traffic light exists in the scene of the narrow camera, after the traffic light is detected by the main camera, it can be determined whether the traffic light exists in the preferential region A. The preferential region A can be a region in the field of view of the main camera but outside the field of view of the narrow camera. And then it can be determined that the traffic light exists in the scene of the main camera when it is determined that the traffic light exists in the preferential region A. When it is determined that the traffic light does not exist in the preferential region A, it can be determined whether the traffic light exists in the preferential region B. The preferential region B can be a region for the field of view of the narrow camera in the field of view of the main camera. Further, when it is determined that the traffic light exists in the preferential region B, it can be determined that the traffic light exists in the scene of the narrow camera.

At step 407, it is determined, in response to detecting that the preferential image region does not include the position of the traffic light, that the position of the traffic light does not match the second camera.

When it is detected that the preferential image region does not include the position of the traffic light, it can be determined that the position of the traffic light does not match the second camera. For example, when the preferential image region for the second camera does not include the position of the traffic light in the first image data collected by the first camera, it is determined that the traffic light does not exist in the scene of the second camera.

At step 408, in response to determining that the position of the traffic light matches the second camera, the second camera is determined as the target camera.

When it is determined that the position of the traffic light matches the second camera, the second camera may be determined as the most suitable camera selected from the plurality of cameras for recognizing the traffic light, and used as the target camera.

At step 409, the traffic light is recognized by using the target camera.

After the target camera is determined, the target camera can be determined as a current camera for recognizing the traffic light, and then the target camera can be used for recognizing the traffic light.

In an example, for the current driving situation, the visual sensing recognition system for traffic lights can seamlessly switch to the pictures taken by the multi-lens camera, and then the most suitable camera can be selected for recognizing the traffic light, thereby avoiding a problem of a missing or unclear traffic light caused by a defect of the angle of view of the monocular camera, and improving the reliability of recognizing the traffic light.

For an algorithm using machine learning, whenever data changes, the algorithm needs to be retrained, and thus requirements on the data are high and a result of the algorithm is unstable. In another example, compared with the algorithm using machine learning, the picture matching algorithm can obtain the geometric position relationship between the cameras, and thus the cameras can be switched accurately to select the most suitable camera for recognizing the traffic light, and the robustness is stronger. Compared with an end-to-end machine learning model, the picture matching algorithm has interpretability.

In an embodiment of the present disclosure, the plurality of cameras is involved, and the fields of view of any two cameras of the plurality of cameras have the coverage relationship. The image data collected by the plurality of cameras is obtained. The position of the traffic light is determined in the first image data collected by the first camera. The relative positional relationship between the first camera and the second camera is obtained. The preferential image region is determined, based on the relative positional relationship, in the first image data. It is detected whether the preferential image region includes the position of the traffic light. It is determined, in response to detecting that the preferential image region includes the position of the traffic light, that the position of the traffic light matches the second camera. It is determined, in response to detecting that the preferential image region does not include the position of the traffic light, that the position of the traffic light does not match the second camera. In response to determining that the position of the traffic light matches the second camera, the second camera is determined as the target camera. The traffic light is recognized by using the target camera. The visual sensing and recognition of multi-camera merging for traffic lights is realized. The image data is collected through the plurality of cameras, and it is detected whether the preferential image region includes the position of the traffic light, so as to filter out the most suitable camera for recognizing the traffic light, thereby avoiding an omission of the traffic light caused by the limited angle of view, improving accuracy and reliability of recognizing the traffic light, and effectively reducing the occurrence of traffic accidents.

It should be noted that, in order to simplify description the present disclosure, method embodiments of the present disclosure are expressed as a series of action combinations, but it would be appreciated by those skilled in the art that the embodiments of the present disclosure are not limited to the order of the actions, for the reason that according to embodiments of the present disclosure, some steps may be executed in other orders or be executed at the same time. In addition, it would be further appreciated by those skilled in the art that embodiments described in the specification are preferred embodiments, and actions involved therein may not be necessary for the embodiments of the present disclosure.

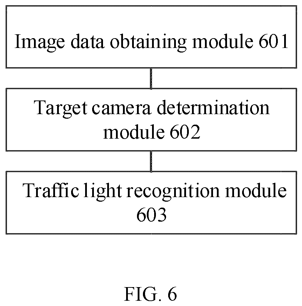

FIG. 6 is a block diagram showing a structure of an apparatus for recognizing a traffic light according to an embodiment of the present disclosure. Referring to FIG. 6, the apparatus may involve a plurality of cameras, and fields of view of any two cameras of the plurality of cameras have a coverage relationship. The apparatus includes an image data obtaining module 601, a target camera determination module 602, and a traffic light recognition module 603.

The image data obtaining module 601 is configured to obtain image data collected by the plurality of cameras.

The target camera determination module 602 is configured to determine a target camera based on the image data collected by the plurality of cameras.

The traffic light recognition module 603 is configured to recognize the traffic light by using the target camera.

The target camera determination module 602 includes a traffic light position determination sub-module, a determination sub-module, and a target camera determination sub-module.

The traffic light position determination sub-module is configured to determine a position of the traffic light in first image data collected by a first camera.

The determination sub-module is configured to determine whether the position of the traffic light matches a second camera. A field of view of the first camera covers a field of view of the second camera.

The target camera determination sub-module is configured to determine, in response to determining that the position of the traffic light matches the second camera, the second camera as the target camera.

The apparatus further includes a determination module.

The determination module is configured to determine, in response to determining that the position of the traffic light does not match the second camera, the first camera as the target camera.

In an embodiment of the present disclosure, the determination sub-module includes a relative positional relationship obtaining unit, a preferential image region determination unit, a detection unit, a first determination unit, and a second determination unit.

The relative positional relationship obtaining unit is configured to obtain a relative positional relationship between the first camera and the second camera.

The preferential image region determination unit is configured to determine, based on the relative positional relationship, a preferential image region in the first image data.

The detection unit is configured to detect whether the preferential image region includes the position of the traffic light.

The first determination unit is configured to determine, in response to detecting that the preferential image region includes the position of the traffic light, that the position of the traffic light matches the second camera.

The second determination unit is configured to determine, in response to detecting that the preferential image region does not include the position of the traffic light, that the position of the traffic light does not match the second camera.

In an embodiment of the present disclosure, the apparatus further includes a first determination module and a second determination module.

The first determination module is configured to determine whether the traffic light is detected in the first image data collected by the first camera.

The second determination module is configured to invoke the traffic light position determination sub-module, in response to determining that the traffic light is detected in the first image data collected by the first camera.

In an embodiment of the present disclosure, the apparatus further includes a second camera determination module, a second camera determining module, and a prompt information output module.

The second camera determination module is configured to determine, in response to determining that no traffic light is detected in the first image data collected by the first camera, whether the second camera is a camera with a smallest field of view.

The second camera determining module is configured to determine, in response to determining that the second camera is not the camera with the smallest field of view, the second camera as the first camera, and return to invoke the first determination module.

The prompt information output module is configured to output, in response to determining that the second camera is the camera with the smallest field of view, prompt information indicating that no traffic light is detected.

In an embodiment of the present disclosure, the plurality of cameras is sorted based on sizes of fields of view, and the first camera and the second camera are cameras sorted to be adjacent to each other.

In an embodiment of the present disclosure, the plurality of cameras is involved. Fields of view of any two cameras of the plurality of cameras have the coverage relationship. The image data collected by the plurality of cameras is obtained. The target camera is determined based on the image data collected by the plurality of cameras. The traffic light is recognized by using the target camera. The visual sensing and recognition of multi-camera merging for traffic lights is realized. The image data is collected through the plurality of cameras to filter out the most suitable camera for recognizing the traffic light, thereby avoiding an omission of the traffic light caused by the limited angle of view, improving accuracy and reliability of recognizing the traffic light, and effectively reducing the occurrence of traffic accidents.

In an embodiment of the present disclosure, an electronic device is provided. The electronic device includes a processor, a memory, and a computer program stored on the memory and executable on the processor. The computer program, when executed by the processor, performs the method for recognizing the traffic light as described above.

In an embodiment of the present disclosure, a computer-readable storage medium is provided. The computer-readable storage medium stores a computer program. The computer program, when executed by a processor, performs the method for recognizing the traffic light as described above.

Since the apparatus embodiments are basically similar to the method embodiments, the description of the apparatus embodiments is relatively simple. For related description, reference may be made to a corresponding part of the description of the method embodiments.

Each embodiment in the specification is described in a progressive manner. Each embodiment focuses on differences from other embodiments. The same or similar parts of various embodiments can be referred to each other.

Those skilled in the art should understand that the embodiments of the present disclosure can be provided as a method, an apparatus, or a computer program product. Therefore, the embodiments of the present disclosure may adopt a form of a complete hardware embodiment, a complete software embodiment, or an embodiment combining software and hardware. In addition, the embodiments of the present disclosure may adopt a form of a computer program product implemented on one or more computer-usable storage media (including but not limited to disk storage, Compact Disc Read-Only Memory (CD-ROM), optical storage, etc.) including computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred embodiments of the embodiments of the present disclosure have been described, those skilled in the art can make additional changes and modifications to these embodiments once they learn the basic creative concept. Therefore, the attached claims are intended to be interpreted as including the preferred embodiments and all changes and modifications falling within the scope of the embodiments of the present disclosure.

Further, It should be noted that relational terms herein, such as "first" and "second", are used only for differentiating one entity or operation from another entity or operation, which, however do not necessarily require or imply that there should be any real relationship or sequence between the entities or operations. Also, terms "comprise", "include" or any other variations thereof are meant to cover non-exclusive including, such that the process, method, article or terminal device including a series of elements do not only include those elements, but also include other elements that are not explicitly listed, or also include inherent elements of the process, method, article or terminal device. In a case that there are no more restrictions, an element qualified by the statement "comprises a ..." does not exclude the presence of additional identical elements in the process, method, article or terminal device that includes the said element.

The above provides detailed description of the provided method and apparatus for recognizing the traffic light. Specific examples are used herein to illustrate the principles and implementations of the present disclosure. The description of the above embodiments is only used to facilitate understanding of the method and a core idea thereof of the present disclosure. In addition, for those skilled in the art, according to the concept of the present disclosure, changes can be made to the specific implementations and the scope of application. In summary, the content of the specification should not be construed as a limitation to the present disclosure.

## Claims

1. A computer-implemented method for recognizing a traffic light, involving a plurality of cameras, and fields of view of any two cameras of the plurality of cameras having a coverage relationship in which a field of view of one camera is covered by a field of view of the other camera, the method comprising:
obtaining (101) image data collected by the plurality of cameras;
determining (102) a target camera based on the image data collected by the plurality of cameras; and
recognizing (103) the traffic light by using the target camera,
wherein said determining the target camera based on the image data collected by the plurality of cameras comprises:
determining (203) a position of the traffic light in first image data collected by a first camera;
obtaining a relative positional relationship of fields of view between the first camera and a second camera based on a picture matching method, and determining (204), based on the relative positional relationship of fields of view, whether the position of the traffic light matches the second camera, wherein a field of view of the first camera covers a field of view of the second camera; and
determining (205), in response to determining that the position of the traffic light matches the second camera, the second camera as the target camera,
wherein said determining (204), based on the relative positional relationship of fields of view, whether the position of the traffic light matches the second camera comprises:
determining (404), based on the relative positional relationship of fields of view, an image region corresponding to the field of view of the second camera in the first image data as a preferential image region for the second camera;
detecting (405) whether the preferential image region comprises the position of the traffic light;
determining (406), in response to detecting that the preferential image region comprises the position of the traffic light, that the position of the traffic light matches the second camera; and
determining (407), in response to detecting that the preferential image region does not comprise the position of the traffic light, that the position of the traffic light does not match the second camera,
wherein the method further comprises:
determining, in response to determining that the position of the traffic light does not match the second camera, the first camera as the target camera.

2. The method according to claim 1, further comprising, prior to said determining the position of the traffic light in the first image data collected by the first camera:
determining whether the traffic light is detected in the first image data collected by the first camera; and
performing, in response to determining that the traffic light is detected in the first image data collected by the first camera, said determining the position of the traffic light in the first image data collected by the first camera.

3. The method according to claim 2, further comprising:
determining, in response to determining that no traffic light is detected in the first image data collected by the first camera, whether the second camera is a camera with a smallest field of view;
determining, in response to determining that the second camera is not the camera with the smallest field of view, the second camera as the first camera, and returning to perform said determining whether the traffic light is detected in the first image data collected by the first camera; and
outputting, in response to determining that the second camera is the camera with the smallest field of view, prompt information indicating that no traffic light is detected.

4. The method according to claim 1, wherein the plurality of cameras is sorted based on sizes of fields of view, and the first camera and the second camera are cameras sorted to be adjacent to each other.

5. A data processing apparatus for recognizing a traffic light, involving a plurality of cameras, and fields of view of any two cameras of the plurality of cameras having a coverage relationship in which a field of view of one camera is covered by a field of view of the other camera, the apparatus comprising:
an image data obtaining module (601) configured to obtain image data collected by the plurality of cameras;
a target camera determination module (602) configured to determine a target camera based on the image data collected by the plurality of cameras; and
a traffic light recognition module (603) configured to recognize the traffic light by using the target camera,
wherein the target camera determination module (602) comprises:
a traffic light position determination sub-module configured to determine a position of the traffic light in first image data collected by a first camera;
a determination sub-module configured to obtain a relative positional relationship of fields of view between the first camera and a second camera based on a picture matching method, and determine, based on the relative positional relationship of fields of view, whether the position of the traffic light matches the second camera, wherein a field of view of the first camera covers a field of view of the second camera; and
a target camera determination sub-module configured to determine, in response to determining that the position of the traffic light matches the second camera, the second camera as the target camera,
wherein the determination sub-module comprises:
a preferential image region determination unit configured to determine, based on the relative positional relationship of fields of view, an image region corresponding to the field of view of the second camera in the first image data as a preferential image region in the first image data for the second camera;
a detection unit configured to detect whether the preferential image region comprises the position of the traffic light;
a first determination unit configured to determine, in response to detecting that the preferential image region comprises the position of the traffic light, that the position of the traffic light matches the second camera; and
a second determination unit configured to determine, in response to detecting that the preferential image region does not comprise the position of the traffic light, that the position of the traffic light does not match the second camera,
wherein the apparatus further comprises:
a determination module configured to determine, in response to determining that the position of the traffic light does not match the second camera, the first camera as the target camera.

6. The apparatus according to claim 5, further comprising:
a first determination module configured to determine whether the traffic light is detected in the first image data collected by the first camera; and
a second determination module configured to invoke the traffic light position determination sub-module, in response to determining that the traffic light is detected in the first image data collected by the first camera.

7. The apparatus according to claim 6, further comprising:
a second camera determination module configured to determine, in response to determining that no traffic light is detected in the first image data collected by the first camera, whether the second camera is a camera with a smallest field of view;
a second camera determining module configured to determine, in response to determining that the second camera is not the camera with the smallest field of view, the second camera as the first camera, and return to invoke the first determination module; and
a prompt information output module configured to output, in response to determining that the second camera is the camera with the smallest field of view, prompt information indicating that no traffic light is detected.

8. The apparatus according to claim 5, wherein the plurality of cameras is sorted based on sizes of fields of view, and the first camera and the second camera are cameras sorted to be adjacent to each other.

9. The apparatus for recognizing the traffic light according to any one of claims 5 to 8, comprising a processor, a memory, and a computer program stored on the memory and executable on the processor, wherein the computer program is configured to, when executed by the processor, cause the performance of the apparatus for recognizing the traffic light.

10. A computer-readable storage medium having a computer program stored thereon, wherein the computer program, when executed by a processor, performs the method for recognizing the traffic light according to any one of claims 1 to 4.

## Patentansprüche

1. Computerimplementiertes Verfahren zum Erkennen einer Verkehrsampel, das mehrere Kameras und Sichtfelder von zwei beliebigen der mehreren Kameras involviert, die eine Abdeckungsbeziehung haben, bei der ein Sichtfeld von einer Kamera durch ein Sichtfeld der anderen Kamera abgedeckt wird, wobei das Verfahren Folgendes beinhaltet:
Erhalten (101) von von den mehreren Kameras gesammelten Bilddaten;
Bestimmen (102) einer Zielkamera auf der Basis der von den mehreren Kameras gesammelten Bilddaten; und
Erkennen (103) der Ampel mit Hilfe der Zielkamera,
wobei das genannte Bestimmen der Zielkamera auf der Basis der von den mehreren Kameras gesammelten Bilddaten Folgendes beinhaltet:
Bestimmen (203) einer Position der Ampel in von einer ersten Kamera gesammelten ersten Bilddaten;
Erhalten einer relativen Positionsbeziehung von Sichtfeldern zwischen der ersten Kamera und einer zweiten Kamera auf der Basis eines Bildabgleichverfahrens, und Feststellen (204), auf der Basis der relativen Positionsbeziehung von Sichtfeldern, ob die Position der Ampel mit der zweiten Kamera übereinstimmt, wobei ein Sichtfeld der ersten Kamera ein Sichtfeld der zweiten Kamera abdeckt; und
Bestimmen (205), als Reaktion auf die Feststellung, dass die Position der Ampel mit der zweiten Kamera übereinstimmt, der zweiten Kamera als die Zielkamera,
wobei das genannte Feststellen (204), auf der Basis der relativen Positionsbeziehung von Sichtfeldern, ob die Position der Ampel mit der zweiten Kamera übereinstimmt, Folgendes beinhaltet:
Bestimmen (404), auf der Basis der relativen Positionsbeziehung von Sichtfeldern, einer Bildregion entsprechend dem Sichtfeld der zweiten Kamera in den ersten Bilddaten als eine bevorzugte Bildregion für die zweite Kamera;
Erfassen (405), ob die bevorzugte Bildregion die Position der Ampel umfasst;
Feststellen (406), als Reaktion auf das Erfassen, dass die bevorzugte Bildregion die Position der Ampel umfasst, dass die Position der Ampel mit der zweiten Kamera übereinstimmt; und
Feststellen (407), als Reaktion auf das Erfassen, dass die bevorzugte Bildregion die Position der Ampel nicht umfasst, dass die Position der Ampel nicht mit der zweiten Kamera übereinstimmt,
wobei das Verfahren ferner Folgendes beinhaltet:
Bestimmen, als Reaktion auf die Feststellung, dass die Position der Ampel nicht mit der zweiten Kamera übereinstimmt, der ersten Kamera als die Zielkamera.

2. Verfahren nach Anspruch 1, das ferner, vor dem genannten Bestimmen der Position der Ampel in den von der ersten Kamera gesammelten ersten Bilddaten, Folgendes beinhaltet:
Feststellen, ob die Ampel in den von der ersten Kamera gesammelten ersten Bilddaten erfasst wird; und
Durchführen, als Reaktion auf die Feststellung, dass die Ampel in den von der ersten Kamera gesammelten ersten Bilddaten erfasst wird, des genannten Bestimmens der Position der Ampel in den von der ersten Kamera gesammelten ersten Bilddaten.

3. Verfahren nach Anspruch 2, das ferner Folgendes beinhaltet:
Feststellen, als Reaktion auf die Feststellung, dass keine Ampel in den von der ersten Kamera gesammelten ersten Bilddaten erfasst wird, ob die zweite Kamera eine Kamera mit einem kleinsten Sichtfeld ist;
Bestimmen, als Reaktion auf die Feststellung, dass die zweite Kamera nicht die Kamera mit dem kleinsten Sichtfeld ist, der zweiten Kamera als die erste Kamera, und Zurückkehren zur Durchführung der genannten Feststellung, ob die Ampel in den von der ersten Kamera gesammelten ersten Bilddaten erfasst wird; und
Ausgeben, als Reaktion auf die Feststellung, dass die zweite Kamera die Kamera mit dem kleinsten Sichtfeld ist, von Aufforderungsinformationen, die angeben, dass keine Ampel erfasst wird.

4. Verfahren nach Anspruch 1, wobei die mehreren Kameras auf der Basis der Größen der Sichtfelder sortiert werden und die erste Kamera und die zweite Kamera Kameras sind, die so sortiert sind, dass sie einander benachbart sind.

5. Datenverarbeitungsvorrichtung zum Erkennen einer Ampel, die mehrere Kameras und Sichtfelder von zwei beliebigen der mehreren Kameras involviert, die eine Abdeckungsbeziehung aufweisen, bei der ein Sichtfeld von einer Kamera durch ein Sichtfeld der anderen Kamera abgedeckt wird, wobei die Vorrichtung Folgendes umfasst:
ein Bilddatengewinnungsmodul (601), das zum Erhalten von von den mehreren Kameras gesammelten Bilddaten konfiguriert ist;
ein Zielkamerabestimmungsmodul (602), das zum Bestimmen einer Zielkamera auf der Basis der von den mehreren Kameras gesammelten Bilddaten konfiguriert ist; und
ein Ampelerkennungsmodul (603), das zum Erkennen der Ampel mit Hilfe der Zielkamera konfiguriert ist,
wobei das Zielkamerabestimmungsmodul (602) Folgendes umfasst:
ein Ampelpositionsbestimmungs-Submodul, konfiguriert zum Bestimmen einer Position der Ampel in von einer ersten Kamera gesammelten ersten Bilddaten;
ein Bestimmungssubmodul, konfiguriert zum Erhalten einer relativen Positionsbeziehung von Sichtfeldern zwischen der ersten Kamera und einer zweiten Kamera auf der Basis eines Bildabgleichverfahrens und zum Feststellen, auf der Basis der relativen Positionsbeziehung von Sichtfeldern, ob die Position der Ampel mit der zweiten Kamera übereinstimmt, wobei ein Sichtfeld der ersten Kamera ein Sichtfeld der zweiten Kamera abdeckt; und
ein Zielkamerabestimmungs-Submodul, konfiguriert zum Bestimmen als Reaktion auf die Feststellung, dass die Position der Ampel mit der zweiten Kamera übereinstimmt, der zweiten Kamera als die Zielkamera,
wobei das Bestimmungssubmodul Folgendes umfasst:
eine Bevorzugte-Bildregion-Bestimmungseinheit, konfiguriert zum Bestimmen, auf der Basis der relativen Positionsbeziehung von Sichtfeldern, einer Bildregion entsprechend dem Sichtfeld der zweiten Kamera in den ersten Bilddaten als eine bevorzugte Bildregion in den ersten Bilddaten für die zweite Kamera;
eine Erfassungseinheit, konfiguriert zum Erfassen, ob die bevorzugte Bildregion die Position der Ampel umfasst;
eine erste Feststellungseinheit, konfiguriert zum Feststellen, als Reaktion auf das Erfassen, dass die bevorzugte Bildregion die Position der Ampel umfasst, dass die Position der Ampel mit der zweiten Kamera übereinstimmt; und
eine zweite Feststellungseinheit, konfiguriert zum Feststellen, als Reaktion auf das Erfassen, dass die bevorzugte Bildregion die Position der Ampel nicht umfasst, dass die Position der Ampel nicht mit der zweiten Kamera übereinstimmt,
wobei die Vorrichtung ferner Folgendes umfasst:
ein Bestimmungsmodul, konfiguriert zum Bestimmen, als Reaktion auf die Feststellung, dass die Position der Ampel nicht mit der zweiten Kamera übereinstimmt, der ersten Kamera als die Zielkamera.

6. Vorrichtung nach Anspruch 5, die ferner Folgendes umfasst:
ein erstes Feststellungsmodul, konfiguriert zum Feststellen, ob die Ampel in den von der ersten Kamera gesammelten ersten Bilddaten erfasst wird; und
ein zweites Feststellungsmodul, konfiguriert zum Aufrufen des Ampelpositionsbestimmungs-Submoduls als Reaktion auf die Feststellung, dass die Ampel in den von der ersten Kamera gesammelten ersten Bilddaten erfasst wird.

7. Vorrichtung nach Anspruch 6, die ferner Folgendes umfasst:
ein zweites Kamerabestimmungsmodul, konfiguriert zum Feststellen, als Reaktion auf die Feststellung, dass keine Ampel in den von der ersten Kamera gesammelten ersten Bilddaten erfasst wird, ob die zweite Kamera eine Kamera mit einem kleinsten Sichtfeld ist;
ein zweites Kamerabestimmungsmodul, konfiguriert zum Bestimmen, als Reaktion auf die Feststellung, dass die zweite Kamera nicht die Kamera mit dem kleinsten Sichtfeld ist, der zweiten Kamera als die erste Kamera, und zum Zurückzukehren zum Aufrufen des ersten Bestimmungsmoduls; und
ein Aufforderungsinformations-Ausgabemodul, konfiguriert zum Ausgeben, als Reaktion auf die Feststellung, dass die zweite Kamera die Kamera mit dem kleinsten Sichtfeld ist, von Aufforderungsinformationen, die angeben, dass keine Ampel erfasst wird.

8. Vorrichtung nach Anspruch 5, wobei die mehreren Kameras auf der Basis der Größen der Sichtfelder sortiert sind und die erste Kamera und die zweite Kamera Kameras sind, die so sortiert sind, dass sie einander benachbart sind.

9. Vorrichtung zum Erkennen der Ampel nach einem der Ansprüche 5 bis 8, die einen Prozessor, einen Speicher und ein im Speicher gespeichertes und von dem Prozessor ausführbares Computerprogramm umfasst, wobei das Computerprogramm so konfiguriert ist, dass es bei Ausführung durch den Prozessor den Betrieb der Vorrichtung zum Erkennen der Ampel bewirkt.

10. Computerlesbares Speichermedium mit einem darauf gespeicherten Computerprogramm, wobei das Computerprogramm bei Ausführung durch einen Prozessor das Verfahren zum Erkennen der Ampel nach einem der Ansprüche 1 bis 4 durchführt.

## Revendications

1. Procédé mis en oeuvre par ordinateur permettant une reconnaissance de feu de circulation, impliquant une pluralité de caméras, et des champs de vision de deux caméras quelconques de la pluralité de caméras présentant une relation de couverture selon laquelle un champ de vision d'une caméra est couvert par un champ de vision de l'autre caméra, le procédé comprenant :
une obtention (101) de données d'image collectées par la pluralité de caméras ;
une détermination (102) d'une caméra cible sur la base des données d'image collectées par la pluralité de caméras ; et
une reconnaissance (103) du feu de circulation en utilisant la caméra cible,
dans lequel ladite détermination de la caméra cible sur la base des données d'image collectées par la pluralité de caméras comprend :
une détermination (203) d'une position du feu de circulation dans de premières données d'image collectées par une première caméra ;
une obtention d'une relation de position relative de champs de vision entre la première caméra et une deuxième caméra sur la base d'un procédé de mise en correspondance d'images, et une détermination (204), sur la base de la relation de position relative de champs de vision, du fait que la position du feu de circulation correspond ou non à la deuxième caméra, dans lequel un champ de vision de la première caméra couvre un champ de vision de la deuxième caméra ; et
une détermination (205), en réponse à une détermination du fait que la position du feu de circulation correspond à la deuxième caméra, de la deuxième caméra à titre de caméra cible, dans lequel ladite détermination (204), sur la base de la relation de position relative de champs de vision, du fait que la position du feu de circulation correspond ou non à la deuxième caméra comprend :
une détermination (404), sur la base de la relation de position relative de champs de vision, d'une région d'image correspondant au champ de vision de la deuxième caméra dans les premières données d'image à titre de région d'image préférentielle pour la deuxième caméra ;
une détection (405) du fait que la région d'image préférentielle comprend ou non la position du feu de circulation ;
une détermination (406), en réponse à une détection du fait que la région d'image préférentielle comprend la position du feu de circulation, du fait que la position du feu de circulation correspond à la deuxième caméra ; et
une détermination (407), en réponse à une détection du fait que la région d'image préférentielle ne comprend pas la position du feu de circulation, du fait que la position du feu de circulation ne correspond pas à la deuxième caméra,
dans lequel le procédé comprend en outre :
une détermination, en réponse à une détermination du fait que la position du feu de circulation ne correspond pas à la deuxième caméra, de la première caméra à titre de caméra cible.

2. Procédé selon la revendication 1, comprenant en outre, avant ladite détermination de la position du feu de circulation dans les premières données d'image collectées par la première caméra :
une détermination du fait que le feu de circulation est détecté ou non dans les premières données d'image collectées par la première caméra ; et
une réalisation, en réponse à une détermination du fait que le feu de circulation est détecté dans les premières données d'image collectées par la première caméra, de ladite détermination de la position du feu de circulation dans les premières données d'image collectées par la première caméra.

3. Procédé selon la revendication 2, comprenant en outre :
une détermination, en réponse à une détermination du fait qu'aucun feu de circulation n'est détecté dans les premières données d'image collectées par la première caméra, du fait que la deuxième caméra est une caméra dotée d'un champ de vision le plus petit ou non ;
une détermination, en réponse à une détermination du fait que la deuxième caméra n'est pas la caméra dotée du champ de vision le plus petit, de la deuxième caméra à titre de première caméra, et un retour à la réalisation de ladite détermination du fait que le feu de circulation est détecté ou non dans les premières données d'image collectées par la première caméra ; et
une émission, en réponse à une détermination du fait que la deuxième caméra est la caméra dotée du champ de vision le plus petit, d'informations d'invite indiquant qu'aucun feu de circulation n'est détecté.

4. Procédé selon la revendication 1, dans lequel la pluralité de caméras est triée sur la base de dimensions de champs de vision, et la première caméra et la deuxième caméra sont des caméras triées pour être adjacentes l'une de l'autre.

5. Appareil de traitement de données permettant une reconnaissance de feu de circulation, impliquant une pluralité de caméras, et des champs de vision de deux caméras quelconques de la pluralité de caméras présentant une relation de couverture selon laquelle un champ de vision d'une caméra est couvert par un champ de vision de l'autre caméra, l'appareil comprenant :
un module d'obtention de données d'image (601) configuré pour obtenir des données d'image collectées par la pluralité de caméras ;
un module de détermination de caméra cible (602) configuré pour déterminer une caméra cible sur la base des données d'image collectées par la pluralité de caméras ; et
un module de reconnaissance de feu de circulation (603) configuré pour reconnaître le feu de circulation en utilisant la caméra cible,
dans lequel le module de détermination de caméra cible (602) comprend :
un sous-module de détermination de position de feu de circulation configuré pour déterminer une position du feu de circulation dans de premières données d'image collectées par une première caméra ;
un sous-module de détermination configuré pour obtenir une relation de position relative de champs de vision entre la première caméra et une deuxième caméra sur la base d'un procédé de mise en correspondance d'images, et déterminer, sur la base de la relation de position relative de champs de vision, le fait que la position du feu de circulation correspond ou non à la deuxième caméra, dans lequel un champ de vision de la première caméra couvre un champ de vision de la deuxième caméra ; et
un sous-module de détermination de caméra cible configuré pour déterminer, en réponse à une détermination du fait que la position du feu de circulation correspond à la deuxième caméra, la deuxième caméra à titre de caméra cible,
dans lequel
le sous-module de détermination comprend :
une unité de détermination de région d'image préférentielle configurée pour déterminer, sur la base de la relation de position relative de champs de vision, une région d'image correspondant au champ de vision de la deuxième caméra dans les premières données d'image à titre de région d'image préférentielle dans les premières données d'image pour la deuxième caméra ;
une unité de détection configurée pour détecter le fait que la région d'image préférentielle comprend ou non la position du feu de circulation ;
une première unité de détermination configurée pour déterminer, en réponse à une détection du fait que la région d'image préférentielle comprend la position du feu de circulation, le fait que la position du feu de circulation correspond à la deuxième caméra ; et
une seconde unité de détermination configurée pour déterminer, en réponse à une détection du fait que la région d'image préférentielle ne comprend pas la position du feu de circulation, le fait que la position du feu de circulation ne correspond pas à la deuxième caméra,
dans lequel l'appareil comprend en outre :
un module de détermination configuré pour déterminer, en réponse à une détermination du fait que la position du feu de circulation ne correspond pas à la deuxième caméra, la première caméra à titre de caméra cible.

6. Appareil selon la revendication 5, comprenant en outre :
un premier module de détermination configuré pour déterminer le fait que le feu de circulation est détecté ou non dans les premières données d'image collectées par la première caméra ; et
un second module de détermination configuré pour invoquer le sous-module de détermination de position de feu de circulation, en réponse à une détermination du fait que le feu de circulation est détecté dans les premières données d'image collectées par la première caméra.

7. Appareil selon la revendication 6, comprenant en outre :
un second module de détermination de caméra configuré pour déterminer, en réponse à une détermination du fait qu'aucun feu de circulation n'est détecté dans les premières données d'image collectées par la première caméra, le fait que la deuxième caméra est une caméra dotée d'un champ de vision le plus petit ;
un second module de détermination de caméra configuré pour déterminer, en réponse à une détermination du fait que la deuxième caméra n'est pas la caméra dotée du champ de vision le plus petit, la deuxième caméra à titre de première caméra, et retourner à l'invocation du premier module de détermination ; et
un module d'émission d'informations d'invite configuré pour émettre, en réponse à une détermination du fait que la deuxième caméra est la caméra dotée du champ de vision le plus petit, des informations d'invite indiquant qu'aucun feu de circulation n'est détecté.

8. Appareil selon la revendication 5, dans lequel la pluralité de caméras est triée sur la base de dimensions de champs de vision, et la première caméra et la deuxième caméra sont des caméras triées pour être adjacentes l'une de l'autre.

9. Appareil permettant une reconnaissance de feu de circulation selon l'une quelconque des revendications 5 à 8, comprenant un processeur, une mémoire, et un programme informatique stocké sur la mémoire et exécutable sur le processeur, dans lequel le programme informatique est configuré pour, lorsqu'il est exécuté par le processeur, provoquer le fonctionnement de l'appareil pour une reconnaissance du feu de circulation.

10. Support de stockage lisible par ordinateur présentant un programme informatique stocké dessus, dans lequel le programme informatique, lorsqu'il est exécuté par un processeur, réalise le procédé de reconnaissance de feu de circulation selon l'une quelconque des revendications 1 à 4.
